# EUROPÄISCHE PATENTSCHRIFT

(11) **EP 2 697 403 B1**
(45) Veröffentlichungstag und Bekanntmachung des Hinweises auf die Patenterteilung: **18.01.2017**
(21) Anmeldenummer: 11808227.0
(22) Anmeldetag: 28.12.2011
(51) Int. Cl.: C22C 9/00, C22C 1/04, C22C 1/05, F16C 17/00

(54) **VERFAHREN ZUR HERSTELLUNG EINES BLEIFREIEN GLEITLAGERMATERIALS**
PROCESS FOR THE PRODUCTION OF A LEAD FREE FRICTION BEARING MATERIAL
PROCÉDÉ POUR LA FABRICATION D'UN MATÉRIAU POUR PALIER À GLISSEMENT SANS PLOMB

(30) Priorität: 14.04.2011 DE 102011007362
(43) Veröffentlichungstag der Anmeldung: 19.02.2014
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55246 Mainz-Kostheim (DE)
(74) Vertreter: Hoffmann Eitle
(86) Internationale Anmeldenummer: PCT/EP2011/074155
(87) Internationale Veröffentlichungsnummer: WO 2012/139671

(56) Entgegenhaltungen:
- EP-A1- 0 962 541
- EP-A1- 2 166 117
- EP-A2- 0 795 693
- WO-A1-2010/128076

## Beschreibung

### Technisches Gebiet

Die Erfindung betrifft ein Verfahren zur Herstellung eines bleifreien Gleitlagermaterials.

An Gleitlager werden verschiedenste Anforderungen gestellt. Diese betreffen beispielsweise die Korrosionsbeständigkeit, die Gleiteigenschaften und die Zerspanbarkeit.

### Stand der Technik

Die DE 10 2007 049 383 A1 betrifft einen Verbundwerkstoff und ein Verfahren zu dessen Herstellung, der aus einem Träger aus Stahl und einer Auflage aus einer aushärtbaren Kupferlegierung besteht, die mittels Walzplattieren aufgebracht wird.

Aus der DE 10 2005 014 302 A1 geht ein Verfahren zur Herstellung eines Gleitlagers aus einer Kupfer-Mehrstofflegierung hervor, bei dem zumindest ein Phasenbestandteil an der Gleitoberfläche mittels einer Säure herausgelöst wird.

Die EP 0 962 541 A1 betrifft ein gesintertes Gleitlagermaterial auf der Basis von Kupfer, das Partikel mit zwei unterschiedlichen Härtegraden aufweist.

Die WO 2010/128076 A1 betrifft die Verwendung von CUFe2P in einem Gleitlager bzw. als Gleitlagerwerkstoff.

### Darstellung der Erfindung

Der Erfindung liegt die Aufgabe zugrunde, ein Verfahren zur Herstellung eines Gleitlagermaterials zu schaffen, mit dem in effizienter Weise Gleitlager mit verbesserten Eigenschaften, insbesondere im Hinblick auf die Korrosionsbeständigkeit und/oder die Gleiteigenschaften, gefertigt werden können.

Die Lösung dieser Aufgabe erfolgt durch das im Anspruch 1 beschriebene Verfahren.

Demzufolge wird ein bleifreier, kupferbasierter Werkstoff, der Eisen und Phosphor enthält, zu Pulver verdüst. Eisen und Phosphor bilden in vorteilhafter Weise Hartpartikel des Typs Fe₂P und/oder Fe₃P, die bei dem erfindungsgemäß hergestellten Gleitlagermaterial ihre Vorteile im Hinblick auf die Verschleißbeständigkeit und die Wirkung als Spanbrecher entfalten. Insbesondere kann hierbei die hohe thermische Leitfähigkeit der genannten Kupfermatrix, die auch durch das Zufügen der genannten weiteren Elemente, insbesondere bei vergleichsweise geringen Konzentrationen, nicht nennenswert beeinträchtigt wird, genutzt werden.

Es hat sich herausgestellt, dass der neuartige Werkstoff auf bestehenden Sinteranlagen bei einer Sintertemperatur bis 1000°C verarbeitet werden kann.

Nach dem Verdüsen wird zumindest eines der Elemente Aluminium, Magnesium, Silizium, Titan, Zirkon, Chrom, Mangan, Zink, Nickel und Molybdän als Pulver zugesetzt und mit dem CuFeP-Pulver vermischt. Die genannten Elemente wirken in vorteilhafter Weise als Korrosionsinhibitoren und vermindern dementsprechend die Korrosionsempfindlichkeit der Kupfermatrix, insbesondere wenn für eine möglichst homogene Verteilung der genannten Elemente in der Matrix gesorgt ist. Die Mindestkonzentration der genannten Elemente beträgt insgesamt 0,1%, bevorzugt 0,2% und insgesamt höchstens 3%.

Bevorzugte Weiterbildungen sind in den weiteren Ansprüchen beschrieben.

Für die Eisen- bzw. Phosphorkonzentration haben sich Werte zwischen 2,1% und 2,6% bzw. 0,015% und 0,15% (Gewichtsprozente) als günstig herausgestellt.

Bei ersten Versuchen hat sich ferner herausgestellt, dass der angestrebte Korrosionsschutz bei bis 3% und insbesondere höchstens 1% eintritt. Derzeit werden hierfür Aluminium und/oder Magnesium bevorzugt.

Die Gleiteigenschaften und die Zerspanbarkeit des erfindungsgemäß hergestellten Gleitlagermaterials kann in vorteilhafter Weise dadurch verbessert werden, dass im Rahmen der Pulverherstellung für den Sinterprozess Hartpartikel, wie z.B. Oxide, Karbide, Nitride und Phosphide, und/oder Feststoffschmiermittel, wie z.B. h-BN und Kohlenstoff, insbesondere Graphit zugefügt werden. Ferner kann zumindest eines der spanbrechenden Elemente Tellur, Bismuth, Blei und Schwefel als sogenannter Spanbrecher in einem dem Sintern vorgeschalteten Prozess zugeführt werden. Insbesondere können Feststoffschmiermittel, Hartteilchen, Spanbrecher etc. eingebracht werden, um das erzeugte Material in anwendungsorientierter Art und Weise zu optimieren. Bevorzugte Hartpartikel sind beispielsweise Al2O3, c-BN, MoSi2, ZrO2, SiO2 und sämtliche Karbide der genannten, korrosionsverhindernden Metalle.

Für die Vermischung der genannten Materialien wird derzeit eine Kugelmühle bevorzugt, die zusätzlich einen Mahlvorgang bewirkt.

Eine Absenkung der Sintertemperatur ist in vorteilhafter Weise durch die bevorzugte gezielte Erhöhung des Feinanteils, d.h. Partikel von < 5 µm, auf mindestens 5% möglich. Dies bietet ferner den Vorteil, dass der technisch bedingte hohe Anteil an feinem Pulver im Rahmen der Erfindung genutzt werden kann, ohne die Fließeigenschaften negativ zu beeinflussen.

Die Weiterverarbeitung des erfindungsgemäß hergestellten Materials erfolgt bevorzugt durch Sintern, Gießen oder Walzplattieren. Beim Gießen ist vorteilhaft, dass nicht notwendigerweise zunächst Pulver hergestellt werden muss. Beim Sintern entfallen in vorteilhafter Weise nachgelagerte Walz- und/oder Wärmebehandlungsschritte.

## Patentansprüche

1. Verfahren zur Herstellung eines bleifreien Gleitlagermaterials, bei dem ein Werkstoff auf Kupferbasis, der aus 2,1% bis 2,6% Eisen und 0,015% bis 0,15% Phosphor, Rest Kupfer besteht, zu Pulver verdüst wird,
wobei nach dem Verdüsen insgesamt mindestens 0,1%, bevorzugt mindestens 0,2% und insgesamt höchstens 3% eines der Elemente Aluminium, Magnesium, Silizium, Titan, Zirkon, Chrom, Mangan, Zink, Nickel und Molybdän als Pulver zugesetzt, mit dem Werkstoff vermischt und vermahlen wird.

2. Verfahren nach Anspruch 1,
**dadurch gekennzeichnet, dass**
der Werkstoff mit insgesamt höchstens 1% der Elemente Aluminium, Magnesium, Silizium, Titan, Zirkon, Chrom, Mangan, Zink, Nickel und Molybdän vermischt wird.

3. Verfahren nach einem der vorangehenden Ansprüche,
**dadurch gekennzeichnet, dass**
der Werkstoff ferner mit einem Feststoffschmiermittel, wie z.B. h-BN und/oder C vermischt wird.

4. Verfahren nach einem der vorangehenden Ansprüche,
**dadurch gekennzeichnet, dass**
der Werkstoff ferner mit Hartteilchen, wie z.B. Oxiden, Karbiden, Nitriden und/oder Phosphiden vermischt wird.

5. Verfahren nach einem der vorangehenden Ansprüche,
**dadurch gekennzeichnet, dass**
der Werkstoff ferner mit zumindest einem der spanbrechenden Elemente Tellur, Bismuth und Schwefel vermischt wird.

6. Verfahren nach einem der vorangehenden Ansprüche,
**dadurch gekennzeichnet, dass**
die Vermischung in einer Kugelmühle durchgeführt wird.

7. Verfahren nach einem der vorangehenden Ansprüche,
**dadurch gekennzeichnet, dass**
das Material mindestens 5% von Partikeln mit einer Größe von < 5 µm aufweist.

8. Verfahren einem der vorangehenden Ansprüche,
**dadurch gekennzeichnet, dass**
das Gleitlagermaterial nachfolgend durch Sintern, Gießen und/oder Walzplattieren weiterverarbeitet wird.

## Claims

1. Method for producing a lead-free sliding bearing material, in which a material based on copper, which consists of 2.1% to 2.6% of iron and 0.015% to 0.15% of phosphorus, remainder copper, is atomised to form powder, wherein after atomising, in total at least 0.1%, preferably at least 0.2% and in total not more than 3% of one of the elements aluminium, magnesium, silicon, titanium, zirconium, chromium, manganese, zinc, nickel and molybdenum is added as powder, mixed with the material and ground.

2. Method according to claim 1, **characterised in that** the material is mixed with in total not more than 1% of the elements aluminium, magnesium, silicon, titanium, zirconium, chromium, manganese, zinc, nickel and molybdenum.

3. Method according to one of the preceding claims, **characterised in that** the material is further mixed with a solid lubricant, such as for example h-BN and/or C.

4. Method according to one of the preceding claims, **characterised in that** the material is further mixed with hard particles, such as for example oxides, carbides, nitrides and/or phosphides.

5. Method according to one of the preceding claims, **characterised in that** the material is further mixed with at least one of the chip-breaking elements tellurium, bismuth and sulphur.

6. Method according to one of the preceding claims, **characterised in that** the mixing is carried out in a ball mill.

7. Method according to one of the preceding claims, **characterised in that** the material has at least 5% of particles having a size of < 5 µm.

8. Method according to one of the preceding claims, **characterised in that** the sliding bearing material is subsequently further processed by sintering, casting and/or roll-bonding.

## Revendications

1. Procédé de fabrication d'un matériau de palier lisse sans plomb, où un matériau à base de cuivre, qui est constitué de 2,1 % à 2,6 % de fer et de 0,015 % à 0,15 % de phosphore, et le reste de cuivre, est atomisé en poudre, dans lequel, après l'atomisation, au total au moins 0,1 %, de préférence au moins 0,2 % et au total au maximum 3% d'un des éléments aluminium, magnésium, silicium, titane, zircon, chrome, manganèse, zinc, nickel et molybdène est ajouté sous forme de poudre, mélangé et moulu avec le matériau.

2. Procédé selon la revendication 1,
**caractérisé en ce que**
le matériau est mélangé avec au total au maximum 1% des éléments aluminium, magnésium, silicium, titane, zircon, chrome, manganèse, zinc, nickel et molybdène.

3. Procédé selon l'une des revendications précédentes,
**caractérisé en ce que**
le matériau est mélangé en outre avec un lubrifiant solide, par exemple h-BN et/ou C.

4. Procédé selon l'une des revendications précédentes,
**caractérisé en ce que**
le matériau est mélangé en outre avec des particules dures, par exemple des oxydes, des carbures, des nitrures et/ou des phosphures.

5. Procédé selon l'une des revendications précédentes,
**caractérisé en ce que**
le matériau est mélangé en outre avec au moins l'un des éléments brise-copeaux tellure, bismuth et soufre.

6. Procédé selon l'une des revendications précédentes,
**caractérisé en ce que**
le mélange est effectué dans un broyeur à boulets.

7. Procédé selon l'une des revendications précédentes,
**caractérisé en ce que** le matériau présente au moins 5 % de particules ayant une dimension < 5 µm.

8. Procédé selon l'une des revendications précédentes,
**caractérisé en ce que**
le matériau de palier lisse est traité ensuite par frittage, coulage et/ou plaquage par laminage.
